# EUROPEAN PATENT APPLICATION

(11) **EP 0 876 043 A2**
(43) Date of publication of application: **04.11.1998**
(21) Application number: 98660036.9
(22) Date of filing: 24.04.1998
(51) Int. Cl.: H04M 3/50, H04M 1/57

(54) **Enhanced voice mail system and method for using it**

(30) Priority: 28.04.1997 FI 971801
(71) Applicant: NOKIA MOBILE PHONES LTD., 02150 Espoo (FI)
(72) Inventor: Rautila, Heikki, 02130 Espoo (FI); Kari, Janni, 00670 Helsinki (FI)
(74) Representative: Brax, Matti Juhani

(57) **Abstract**

For providing voice message services to the users of a telephone system (14), the caller's telephone call is directed to the voice mail system (15) and the voice message (21e) left by the caller is saved. In addition, the caller is identified (15a) by using the CLI information related to the caller's telephone call, and information describing the identified user (21c) is given to the intended recipient of the voice message. As a response to a command given by the recipient, it is possible quickly and automatically to make a telephone call (15c) to the caller on the basis of the saved CLI.

## Description

The invention relates to voice mail systems connected to telephone networks in general, and particularly to a method and equipment for facilitating the use of voice mail systems.

The voice mail system is an additional function in many telephone networks, by means of which the caller can leave a short voice message to the recipient, with whom a telephone connection cannot be established at the moment when the call takes place. The telephone operator or another agent authorized by it maintains a system for transmitting voice messages, which system - when certain conditions are met - answers the telephone call, asks the caller to leave a message, receives the message dictated by the caller and saves it in the memory in digital form. When the recipient, to whom the telephone call directed to the voice mail system was intended establishes a connection with the voice mail system for the next time, the system reads the saved message from the memory and transmits it to the recipient, whose telephone repeats the message transmitted in electric form to the recipient as voice. In contrast to the traditional telephone answering machine, all the equipment and functions required by the voice mail system are situated centrally in the telephone network and not decentralized in connection with the terminal equipment of the users.

In order to notify the recipient that voice messages have been left to him/her, most voice mail systems transmit to the recipient a message of the type "messages waiting" through the Short Message Service, SMS, for example, or in other ways. In some systems the users must call the voice mail system themselves to find out if messages have been left to them. All the prior art systems are characterized in that even if the user gets the information that there are messages for him/her in the voice mail system, the identity of the callers and the contents of the messages are not found out unless the user contacts the voice mail system and listens to the messages left. This can be regarded as a drawback, because often the information of who has called is even more important than the small piece of information that the caller has included in the short message saved by the voice mail system. If the recipient is busy, he/she could decide to listen to the messages of only those callers who are regarded as the most important, and leave the other messages to wait for a more peaceful moment, if there is a simple way of identifying the persons who left the messages.

The patent specification EP 619 668 discloses an arrangement, in which the telephone answering machine of the recipient includes speech recognition equipment, which identify the telephone number dictated by the caller and convert it into electrical form. If the recipient so wishes, he/she can have the caller's telephone number, which has been converted to electric form, displayed on the telephone answering machine, and the telephone number has also been saved in the memory of the telephone answering machine so that the recipient can easily dial the telephone number in question. However, speech recognition equipment are so far not so advanced that they could easily recognize series of numbers dictated by random speakers, and thus the operation of a system according to the specification would be very uncertain in practice. In addition, a system with speech recognition equipment and speech synthesizers according to the specification would be rather expensive as a private user's terminal equipment.

The objective of the present invention is to provide a method and a system for facilitating the use of a voice mail system. In particular, the purpose of the invention is to present a method and a system by which the recipient can know in advance who has left voice messages for him/her.

The objectives of the invention are achieved by arranging the caller's identification in the voice mail system on the basis of the Calling Line Identity (CLI) of the telephone call.

The method according to the invention is characterized in that in it the caller is identified by using the calling line ID of the caller's telephone call and the information describing the identified caller is given to the intended recipient of the voice message.

The invention also relates to a system for implementing the method according to the invention. The system according to the invention is characterized in that it includes means for identifying the caller on the basis of the calling line ID of the caller's telephone call and for saving the information describing the identified caller together with the voice message left by the caller.

In addition, the invention relates to a telephone apparatus for using the voice mail system, which telephone apparatus comprises means for receiving the information of a voice message that has arrived. The telephone apparatus according to the invention is characterized in that it also comprises means for separating the caller identification data included in the information about a voice message arrived and for exhibiting this data to the user.

Transmitting the identification data describing the caller, the calling line ID, together with the telephone connection to be established in order that the recipient can find out who is calling, is a technique well known as such. Some data communication networks even show the name of the caller, thus also utilizing other caller identification data than the calling line ID. By way of example, this patent application only deals with calling line ID. According to the invention, a device for detecting the CLI of the caller is connected to the voice mail system or its immediate vicinity. In practice, the CLI is the same as the caller's own telephone number. The voice mail system saves the CLI together with the voice message dictated by the caller. After this, the voice mail system can send notification to the intended recipient about a voice message waiting, together with the CLI of the caller who left the message, whereby the recipient will know who has left the voice message. The caller's telephone number saved in the voice mail system can also be utilized so that when the recipient contacts the voice mail system in order to listen to the message(s), by a certain simple key command or other command to be transmitted to the voice mail system, he/she can establish a telephone connection to the number saved by the system. By this procedure, the delay and poor user ergonomics characteristic to the prior art can be avoided: in the prior art, the recipient listens to a voice message, in which the caller normally tells his/her own telephone number, and writes the caller's telephone number down on a piece of paper, after which he/she disconnects the call to the voice mail system and dials the telephone number written down by using the numerical keys of the telephone.

In the following, the invention will be described in more detail with reference to the preferred embodiments shown by way of example and the appended drawings, in which
- Figure 1: shows a system according to the invention,
- Figure 2: shows a mobile station that can be used in a system according to the invention, and
- Figures 3a and 3b: show a flow chart of the method according to the invention.

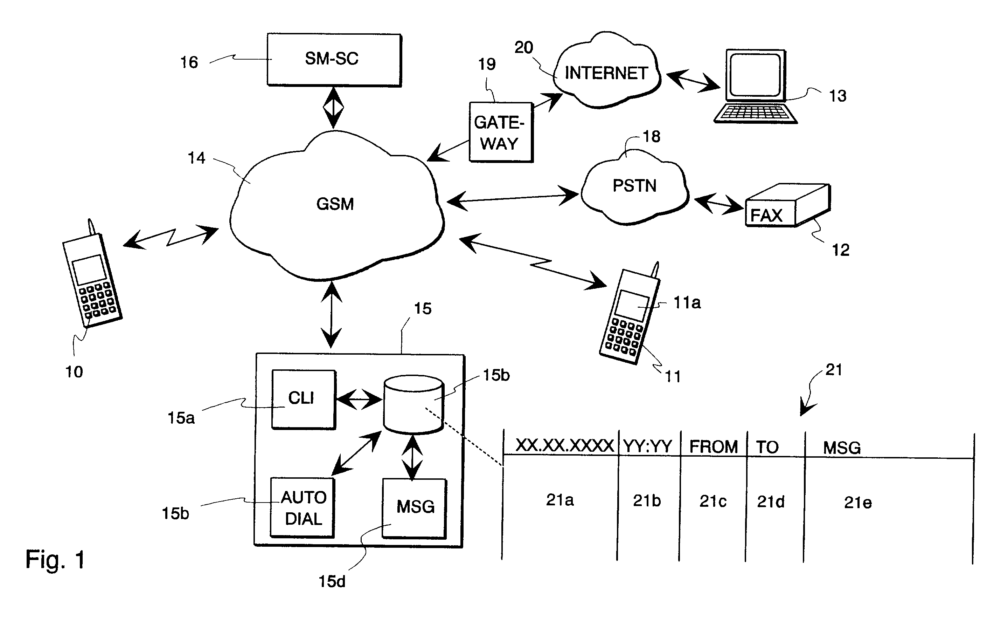

Figure 1 shows the caller's telephone 10 and the recipient's telephone 11, a telecopier 12 and a computer 13. In this example, the telephones 10 and 11 of the caller and the recipient are mobile phones of the GSM system, which operate in the GSM network 14. As additional services, the network in question incorporates a voice mail system 15 and a short message service centre (SM-SC) 16. The GSM network 14 is in a manner generally known connected to the public switched telephone network (PSTN) 18. A gateway computer 19 transmits communications in a known manner between the GSM network 14 and a data transfer network between computers, such as the Internet network 20.

The recipient's telecopier 12 is connected to the public switched telephone network 18, and the recipient's computer 13 is connected to the Internet network 20.

The voice mail system 15 comprises a caller identification system 15a, a database 15b, an automatic dialling unit 15c and a notification unit 15d. The database 15b can be arranged as an array 21, for example, in which a single voice message is depicted by a row in the array, and in which the columns are the date and time columns 21a and 21b depicting the arrival time of the voice message, the CLI column depicting the caller's identification data 21c, the recipient column 21d and the message column 21e. The array can also have other columns.

The system according to Figure 1 functions as follows. The caller tries to establish a telephone connection to the recipient's telephone 11 with the caller's telephone 10, but the recipient's telephone does not answer, whereby the caller's telephone call is directed in a well known manner to the voice mail system 15. Then the caller hears from the telephone 10 a message sent by the voice mail system 15, asking him/her to leave a short voice message to the recipient. At the same time, the caller identification system 15a detects the caller's CLI from the telephone call directed to the voice mail system. The caller can end the call without leaving a voice message, in which case the operation is discontinued. If the caller dictates a voice message, a new line is formed in the database 15b, describing the voice message left by the caller. The time when the voice message was left is saved in columns 21a and 21b, the caller's CLI is saved in column 21c, the information of the intended recipient is saved in column 21d and the digitized voice message is saved in column 21e.

In an alternative embodiment, the voice mail system 15 can ask the caller to enter a telephone number that the caller wants to add to the message left to the recipient. This embodiment can be used if the telephone call comes from an analogue public switched telephone network or other such network which cannot transmit the caller's CLI. It is also possible that the caller wants to leave the recipient another telephone number. As a response to the request, the caller enters the desired telephone number, whereby it is transmitted in the Dual Tone MultiFrequency (DTMF) form via the telephone connection to the voice mail system, in which the caller identification system converts it into essentially the same form in which the normally identified CLI data are saved.

When the caller has hung up the telephone, the notification part 15d of the voice mail system reads the columns 21a -21d of the new row and forms a notification of an arrived voice message for the recipient. The notification can be sent to the recipient in different ways. One possibility is to form a short message, which is sent to the short message centre 16, from which it is directed in a known manner to the recipient's GSM telephone 11, whereby the recipient can read the message from the display 11a. Another alternative is to read the recipient's telefax number from the directory (not shown in the figure) included in the GSM network 14 and to route the notification via the public switched telephone network 18 as a telefax to the recipient's telecopier 12. A third alternative is to read the recipient's e-mail address from the directory included in the GSM network 14 and to send the notification via the gateway computer 19 and the Internet network 20 as e-mail to the recipient's computer 13. The notification includes information describing the caller, which information has been read from column 21c of the array 21, whereby, regardless of the route by which the notification arrives to the recipient, he/she gets information of the voice message left, and also of the caller who left the message.

Each user of the voice mail system can save settings to the voice mail system in advance, which settings determine by which route the notifications of arrived voice messages are routed to the recipient. Because the notification includes the caller's CLI, which in practice is the caller's telephone number, the recipient's terminal equipment (any of the above mentioned) can also examine the arrived notifications before presenting them to the recipient and automatically attach to the notification the caller's name or other exact identification information, which the terminal equipment has read from the telephone memo saved in its memory. This function can also be performed in the network before delivering the notification to the recipient's terminal equipment, if the network comprises the required directories (not shown in the figure).

When the recipient uses the telephone 11 to contact the voice mail system 15, he/she can, in a known manner, listen to the voice messages. It has been found that in most cases the voice message includes a request that the recipient would call back the caller. Because the caller's CLI has been saved in the database 15b, the voice mail system 15 can ask the recipient to enter a certain simple command, for example to press the # key, and when this command has been transmitted to the voice mail system, the automatic dialling part 15c dials the telephone number for establishing a telephone connection. Calling that takes place by a simple command is particularly advantageous compared to the prior art, especially when driving a motor vehicle or in some other situation requiring coordination, because the user of the voice mail system does not need to write the caller's telephone number on a piece of paper when listening to the message or try to remember it by heart.

If the voice mail system does not include the automatic dialling part, but the recipient's terminal equipment is a digital telephone or a modern multi-function communicator, it can automatically detect the caller's telephone number from the short message or e-mail notification and to offer the recipient the possibility to call the number by a simple command. Detecting the telephone number from a character string notification is a simple and known artificial intelligence technique, in which the device seeks strings formed by certain consecutive numbers from a character string, and concludes that such a string that complies with certain rules of form is the telephone number. If the notification complies with a certain predetermined standard form, it is even more simple to detect the caller's telephone number, because it is always at the same point in the notification.

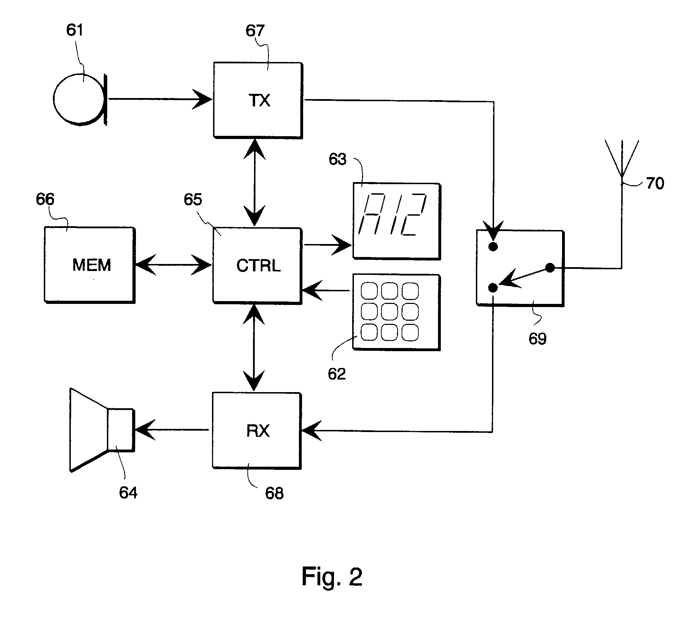

Figure 2 shows a mobile phone construction of the kind that can be used as part of a telephone system, which comprises a voice mail system according to the invention. The mobile station comprises components that are typical of prior art mobile stations, such as microphone 61, key set 62, display 63, earpiece 64, antenna 70, duplex switch 69 and control block 65, which controls the operation of the mobile station. The control block 65 can be typically implemented by a MicroController Unit (MCU) or a digital signal processor (DSP). In addition, Figure 2 shows the transmission block 67 and the reception block 68 characteristic of a prior art mobile station. The transmission block 67 comprises speech coding, channel coding, encryption and modulation and the radio frequency operations of transmission. Correspondingly, the reception block 68 comprises the reception radio frequency operations, demodulation, decryption, channel decoding and speech decoding. The control block 65 also controls the user interface of the mobile station and uses it to notify the user of voice messages that have arrived. Using the invention, the mobile station saves the notification of a voice message that has arrived in the internal memory 66 of the mobile station or in the memory of the Subscriber Identity Module (SIM) of the mobile station. When controlled by the control block 65, the mobile station can also separate the CLI from the message arrived. The separation of the CLI can take place in a manner disclosed in the specification EP 458 563, for example.

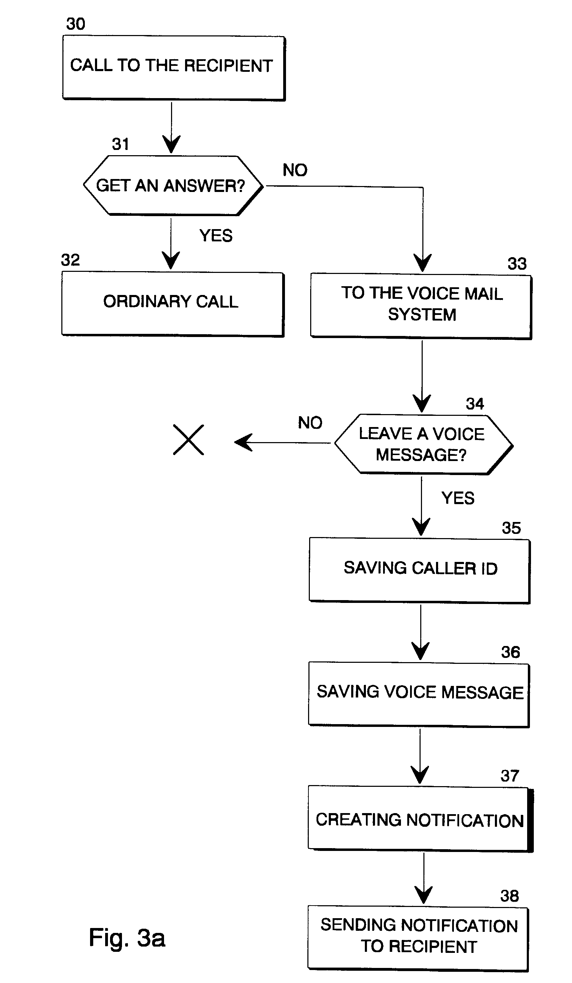

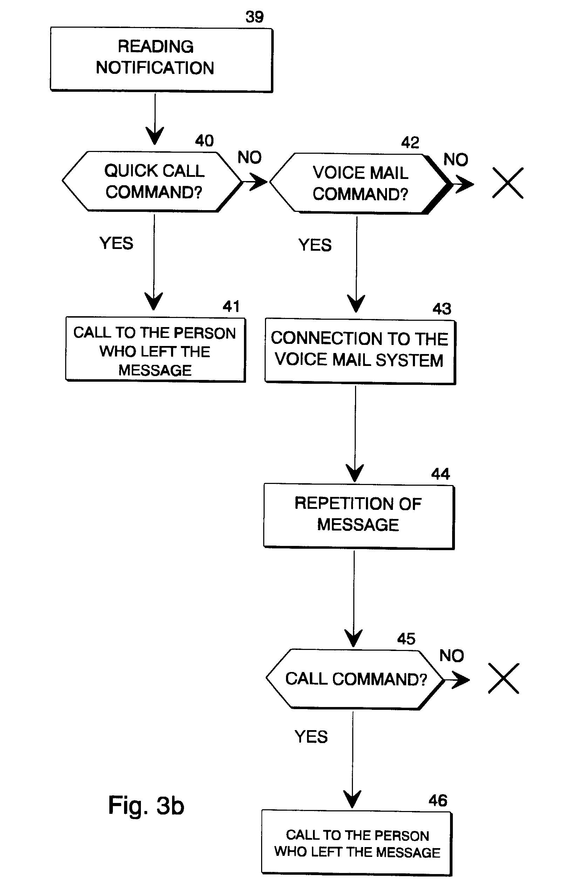

Figures 3a and 3b show a method according to the invention in the form of a flowchart. At stage 30, the caller tries to call the recipient. If the recipient answers at stage 31, the result is an ordinary telephone call according to stage 32. If the recipient does not answer, the telephone call is directed to the voice mail system in accordance with stage 33. If the caller hangs up the telephone at stage 34 before leaving a voice message, the operation ends according to the marking X. If the caller leaves a voice message, the system saves the caller's CLI, information of the intended recipient, information of the time when the message was left and the message itself at stages 35 and 36. After saving the message, at stage 37 the system forms a notification to the recipient about the message and sends it at stage 38.

At stage 39, the recipient reads the message that has arrived. Here it is assumed that the terminal equipment of the recipient has automatic identification of the caller's number from the CLI transmitted together with the message, whereby at stage 40 the recipient's terminal equipment provides a possibility to call directly to the caller who left the message by a simple command. The formation of the telephone call is depicted by stage 41. If the recipient does not use this possibility, at stage 42 he/she has the possibility to establish a connection to the voice mail system. If a connection is not established, the operation ends according to the marking X. If the recipient calls the voice mail system in accordance with stage 43, at stage 44 the system repeats the voice messages wanted by the recipient. The repetition procedure can include various steps, in which the user controls the repetition of the messages by commands given by pressing the keys of the mobile station. For the sake of clarity, the repetition is here shown only as one stage 44. At this stage, the user is also offered a possibility to call the caller who left a certain message in accordance with stages 45 and 46. If the user does not use this possibility, the operation is ended.

The flowchart shown in Figures 3a and 3b is not the only one possible, but some stages can be removed from it, and stages both from the above description and stages that are part of known voice mail systems can be added to it without departing from the scope defined by the claims presented hereinafter. The mutual order of the stages can also be changed; for example, with regard to the invention it is not essential whether the voice mail system saves the information of the caller and the intended recipient before saving the voice message or after it.

## Claims

1. A method for providing voice mail services to the users of a telephone system, comprising stages at which
- the caller's telephone call is directed (33) to the voice mail system (15) and
- the voice message (21e) left by the caller is saved (36),
**characterized** in that in it the caller is identified (35) by using caller identification information related to the call, such as the CLI, and information (21c) depicting the identified caller is given to the intended recipient of the voice message.

2. A method according to Claim 1, **characterized** in that the intended recipient is sent (15d; 38) notification of the voice message left, which notification includes the caller's CLI.

3. A method according to Claim 2, **characterized** in that said notification is in one of the following forms: short message, e-mail message, telefax.

4. A method according to Claim 1, **characterized** in that notification of the voice message left is sent (38) to the intended recipient, which notification includes other information than CLI describing the caller, which information has been read from a directory used by the telephone system.

5. A method according to Claim 1, **characterized** in that the information describing the identified caller is given to the intended recipient of the voice message as a response to an operation performed by the intended recipient of the voice message.

6. A method according to Claim 1, **characterized** in that as a response to a command given by the intended recipient a phone call is automatically made (15c; 41, 46) to the caller's telephone number.

7. A system for providing voice mail services to users, comprising
- a telephone network (14) and
- a voice mail system (15) built in the telephone network,
**characterized** in that it comprises means (15a) for identifying the caller on the basis of the CLI related to the caller's telephone call and for saving (15b) information describing the identified caller together with the voice message left by the caller.

8. A system according to Claim 7, **characterized** in that it comprises notification means (15d) for sending a notification describing the voice message to the intended recipient and for attaching the information describing the identified caller to said notification.

9. A system according to Claim 7, **characterized** in that it comprises automatic dialling means (15c) for calling to the caller's telephone number as a response to the command given by the intended recipient.

10. A telephone apparatus for using the voice mail system, which apparatus comprises means (70, 69, 68) for receiving a notification about the voice message arrived, **characterized** in that it also comprises means (65, 63) for separating the caller identification information included in the notification about the voice message arrived and presenting said information to the user.

11. A telephone apparatus according to Claim 10, **characterized** in that it also comprises means (65, 67, 69, 70) for establishing a telephone connection to the caller's telephone number exhibited by the notification about the voice message arrived as a response to a command given by the user.
